# EUROPEAN PATENT SPECIFICATION

(11) **EP 4 276 968 B1**
(45) Date of publication and mention of the grant of the patent: **15.07.2026**
(21) Application number: 21917763.1
(22) Date of filing: 28.12.2021
(51) Int. Cl.: H01M 10/12, H01M 50/463, H01M 10/06, H01M 10/14, H01M 50/46, H01M 50/70

(54) **SEPARATOR FOR LEAD-ACID BATTERY**
SEPARATOR FÜR BLEISÄUREBATTERIE
SÉPARATEUR POUR BATTERIE AU PLOMB-ACIDE

(30) Priority: 06.01.2021 JP 2021000882
(43) Date of publication of application: 15.11.2023
(73) Proprietor: ENTEK Asia Inc, Fuwa-gun, Gifu 5032121 (JP)
(72) Inventor: KAGEYAMA, Hiroki, Fuwa-gun, Gifu 503-2121 (JP); SHIDOMI, Takashi, Fuwa-gun, Gifu 503-2121 (JP); ONISHI, Masaki, Fuwa-gun, Gifu 503-2121 (JP)
(74) Representative: Kraeh, Christian
(86) International application number: PCT/JP2021/048800
(87) International publication number: WO 2022/149543

(56) References cited:
- JP-A- 2001 210 302
- JP-A- 2005 197 145
- JP-A- 2005 197 145
- JP-A- 2006 228 637
- JP-A- 2007 095 419
- JP-A- 2013 508 917
- JP-A- 2015 022 921
- JP-A- 2019 220 347
- JP-A- 2019 517 713
- US-A1- 2017 104 199

## Description

### Technical Field

The present invention relates to a separator for a lead acid battery comprising a ribbed microporous film provided with a plurality of ribs at predetermined intervals, and a lead acid battery using the separator.

### Background Art

At present, automobile manufacturers are striving to reduce fuel consumption and suppress greenhouse gas emissions in order to effectively utilize limited resources and prevent global warming, and as one form, there is a micro-hybrid system that uses a motor to drive with gasoline, regenerate energy during braking, and restart from idling stop.

In the micro-hybrid system, excessive energy consumption can be suppressed by energy recovery through regenerative braking and idling stop, and fuel consumption efficiency can be improved.

The micro-hybrid system does not require a large-capacity rechargeable battery for a fully electric vehicle (full EV), a plug-in hybrid vehicle (PHEV), or the like so as to be able to improve fuel consumption efficiency at low cost, and therefore is installed in many vehicles mainly light motor vehicles at present.

However, in the micro-hybrid system, it is necessary to cover all power used for air conditioning, audio, and various indicator lights with the electricity from the storage battery while the vehicle is stopped due to the idling stop operation, and the burden on the storage battery is increasing as compared with a conventional gasoline vehicle.

It is known that in a lead acid battery used for an automobile, sulfuric acid generated during charging sediments at the bottom of the battery, and at the top of the battery, water generated during discharging separates due to the difference in specific gravity thereof and forms layers, and this phenomenon is called stratification. In a conventional gasoline vehicle that is not a hybrid with a motor, a lead acid battery becomes in an excessively charged state during charging, and a gas is generated by electrolysis of water due to excessively supplied electric power, and the stratification could be eliminated by the increase in gas.

However, in a charge control vehicle of a micro-hybrid system or the like, excessive charging is suppressed by the idling stop operation, and the amount of a gas generated by electrolysis of water is minimized, so that the stratified battery is not subjected to a stirring action of the gas, and therefore, stratification caused by partial charging is difficult to eliminate.

It is known that the output voltage of a lead acid battery and the amount of charged electricity depend on the electrolyte concentration, and the amount of charge and the deterioration degree of the battery are monitored with reference to the electrolyte concentration. However, stratification causes a difference in electrolyte concentration between the top and bottom of the lead acid battery, so that the amount of charge and the deterioration degree of the battery cannot be correctly determined, which causes a deterioration in the reliability of battery control and a shortening of the life of the battery itself.

In a flooded lead acid battery, an attempt has been made to suppress or eliminate stratification by the shape of a polyethylene separator that is widely used at present (see, for example, PTLs 1, 2 and 3, and expectations for separators are increasing.

The battery reliability (prolongation of life during idling stop operation and stability of charge amount detection) of a lead acid battery has been required. Therefore, in order to suppress electrolyte stratification, separators having various rib shapes for controlling the movement of the electrolyte inside the battery jar have been required.

### Citation List

### Patent Literature

PTL 1: JP2018-530126A
PTL 2: JPH02-94253A
PTL3: JP2005-197145A

### Summary of Invention

### Technical Problem

The invention has been made in consideration of such circumstances, and an object of the invention is to provide a separator for a lead acid battery capable of suppressing electrolyte stratification and improving the battery reliability (prolongation of life during idling stop operation and stability of charge amount detection) of a lead acid battery.

### Solution to Problem

As a result of extensive and intensive studies for solving the above problem, the separator for a lead acid battery of the invention is a separator for a lead acid battery having the following characteristics.
(1) A separator for a lead acid battery for use in a flooded lead acid battery, wherein the separator comprises a porous backweb and a plurality of ribs extending from each of both surfaces of the backweb, the rib on a surface on a side that comes into contact with a positive electrode plate is a broken rib, **characterized in that** the rib has a shape with two or more bending points, and is a linear broken rib that bends in opposite directions at each of two consecutive bending points or is a curved broken rib having one or more inflection points; and the plurality of broken ribs are arranged such that a gap formed between a set of the broken rib and the broken rib adjacent to each other in a horizontal direction (CD direction, X) of the separator does 0% overlap in a vertical direction (MD direction, Y) of the separator with a gap formed between another set of the broken rib and the broken rib adjacent to each other in the horizontal direction (CD direction, X) of the separator, disposed adjacent in the vertical direction (MD direction, Y) of the separator.
(2) The separator for a lead acid battery according to the above (1), characterized in that the broken rib includes those having mutually different bending angles or those having mutually different line segment lengths.
(3) The separator for a lead acid battery according to the above (1), characterized in that the broken rib has two-fold rotational symmetry.
(4) The separator for a lead acid battery according to the above (1), characterized in that the broken rib is a linear broken rib in which line segments located at both ends are substantially parallel to each other.
(5) The separator for a lead acid battery according to any one of the above (1) to (4), characterized in that the broken rib is a linear broken rib having a shape in which bending angles at all bending points are 90° or more and less than 180°.
(6) The separator for a lead acid battery according to any one of the above (1) to (5), characterized in that the broken rib is a linear broken rib having two bending points.
(7) The separator for a lead acid battery according to any one of the above (1) to (3), characterized in that the broken rib is a curved broken rib having a shape in which an internal angle formed by a tangent line at an inflection point and a tangent line at an inflection point adjacent thereto, or an internal angle formed by a tangent line at an inflection point and a tangent line at a tip portion of the rib is 90° or more and less than 180°.
(8) The separator for a lead acid battery according to the above (7), characterized in that the broken rib is a curved broken rib that has one inflection point and has a shape in which an internal angle formed by a tangent line at the inflection point and a tangent line at a tip portion of the rib is 90° or more and less than 180°.
(9) The separator for a lead acid battery according to any one of the above (1) to (8), characterized in that the plurality of broken ribs are arranged substantially horizontally to one another with respect to a horizontal direction (CD direction) of the separator.
(10) The separator for a lead acid battery according to any one of the above (1) to (8), characterized in that the plurality of broken ribs are arranged such that the broken rib and another broken rib adjacent to the broken rib in a vertical direction (MD direction) of the separator do not completely overlap with each other in the vertical direction (MD direction) of the separator.
(11) The separator for a lead acid battery according to any one of the above (1) to (8), characterized in that the plurality of broken ribs are arranged such that a gap formed between the broken rib and the broken rib most adjacent to the broken rib, located on a right side with respect to a horizontal direction (CD direction) of the separator does not overlap in a vertical direction (MD direction) of the separator with a gap formed between the broken rib and the broken rib second most adjacent to the broken rib, located on the right side of the broken rib with respect to the horizontal direction (CD direction) of the separator, or a gap formed between the broken rib and the broken rib most adjacent to the broken rib, located on a left side with respect to the horizontal direction (CD direction) of the separator does not overlap in the vertical direction (MD direction) of the separator with a gap formed between the broken rib and the broken rib second most adjacent to the broken rib, located on the left side of the broken rib with respect to the horizontal direction (CD direction) of the separator.
(12) A lead acid battery, comprising the separator according to any one of the above (1) to (11).

### Advantageous Effects of Invention

The separator for a lead acid battery of the invention has broken ribs having a shape effective for controlling the movement of the electrolyte inside the battery jar, and the broken ribs are arranged so that the movement of the electrolyte inside the battery jar can be effectively controlled, and therefore, electrolyte stratification can be suppressed, and a deterioration in reliability of battery control and a decrease in battery life due to electrolyte stratification can be suppressed.

### Brief Description of Drawings

[FIG. 1] FIG. 1 is an example of a linear broken rib that bends in opposite directions at each of two consecutive bending points.
[FIG. 2] FIG. 2 is an arrangement example of broken ribs arranged on a surface of a separator on a side that comes into contact with a positive electrode plate.
[FIG. 3] FIG. 3 is an arrangement example of broken ribs arranged on a surface of a separator on a side that comes into contact with a positive electrode plate.
[FIG. 4] FIG. 4 is an arrangement example of broken ribs arranged on a surface of a separator on a side that comes into contact with a positive electrode plate.
[FIG. 5] FIG. 5 is an arrangement example of broken ribs arranged on a surface of a separator on a side that comes into contact with a positive electrode plate.
[FIG. 6] FIG. 6 is an arrangement example of broken ribs arranged on a surface of a separator on a side that comes into contact with a positive electrode plate.
[FIG. 7] FIG. 7 is an arrangement example of broken ribs arranged on a surface of a separator on a side that comes into contact with a positive electrode plate.

### Description of Embodiments

The separator for a lead acid battery of the invention comprises a porous backweb and a plurality of ribs extending from each of both surfaces of the backweb, and the rib on a surface on a side that comes into contact with a positive electrode plate is a linear broken rib that has two or more bending points and bends in opposite directions at each of two consecutive bending points or is a curved broken rib that has one or more inflection points. Accordingly, it is possible to suppress electrolyte stratification by inhibiting the movement of the electrolyte (sulfuric acid) having a high specific gravity generated during charging to the bottom of the battery (downward).

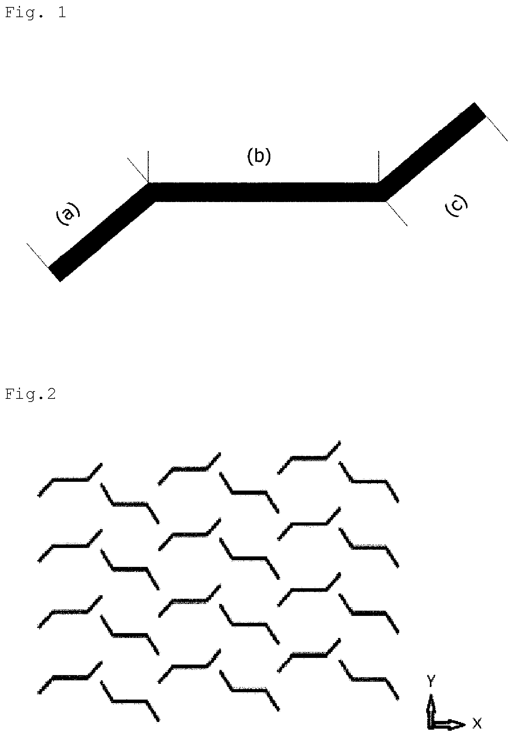

FIG. 1 is an example of a linear broken rib that is used in the separator for a lead acid battery of the invention, and has two or more bending points and bends in opposite directions at each of two consecutive bending points.

The linear broken rib shown in FIG. 1 has two bending points, and (a), (b), and (c) in this case each represent a line segment of the linear broken rib.

As the linear broken rib that has two or more bending points and bends in opposite directions at each of two consecutive bending points, one having two-fold rotational symmetry, for example, one in which an internal angle (bending angle) formed by the line segment (a) and the line segment (b) and an internal angle (bending angle) formed by the line segment (b) and the line segment (c) are the same, and the lengths of the line segment (a) and the line segment (c) are the same is preferably used. However, it may be one in which the internal angle (bending angle) formed by the line segment (a) and the line segment (b) and the internal angle (bending angle) formed by the line segment (b) and the line segment (c) are different, or one in which the lengths of the line segment (a) and the line segment (c) are different.

In the invention, as the linear broken rib that has two or more bending points and bends in opposite directions at each of two consecutive bending points, one in which line segments located at both ends, for example, the line segment (a) and the line segment (c) are substantially parallel to each other, that is, a difference between the internal angle (bending angle) formed by the line segment (a) and the line segment (b) and the internal angle (bending angle) formed by the line segment (b) and the line segment (c) is within 10° is preferred, and one in which the difference is within 5° is more preferred.

In the invention, as the linear broken rib that has two or more bending points and bends in opposite directions at each of two consecutive bending points, one in which bending angles (internal angles) at all bending points are 90° or more and less than 180° is preferred, and one in which the bending angles are 120° or more and 150° or less is more preferred.

In addition, one having an even number of bending points is preferred, and one having two bending points is more preferred.

A line segment in the curved broken rib that is used for the separator for a lead acid battery of the invention and has one or more inflection points means a portion between an extremum point and an extremum point adjacent to each other on the curved broken rib and a portion between an end of the broken rib and an extremum point adjacent thereto.

As the curved broken rib having one or more inflection points, one having two-fold rotational symmetry, for example, in the case of the curved broken rib having one inflection point, one in which curvature radii at two adjacent extremum points are the same, and the lengths of two line segments located between two ends of the broken rib and an extremum point adjacent thereto are the same is preferably used. However, it may be one in which curvature radii at two adjacent extremum points are different, or one in which the lengths of two line segments located between two ends of the broken rib and an extremum point adjacent thereto are different.

In the invention, as the curved broken rib having one or more inflection points, one in which an internal angle formed by a tangent line at an inflection point and a tangent line at an inflection point adjacent thereto, or an internal angle formed by a tangent line at an inflection point and a tangent line at a tip portion of the rib is 90° or more and less than 180° is preferred, and one in which the internal angle is 120° or more and 150° or less is more preferred.

In addition, it is preferred to have an odd number of inflection points, and it is more preferred to have one inflection point, and one in which an internal angle formed by a tangent line at the inflection point and a tangent line at a tip portion of the rib is 90° or more and less than 180° is preferred, and one in which the internal angle is 120° or more and 150° or less is more preferred.

It is preferred that the broken rib used for the separator for a lead acid battery of the invention has a total length (for example, in the case of the linear broken rib shown in FIG. 1, the sum of the lengths of the line segment (a), the line segment (b), and the line segment (c)) of 5 to 40 mm, a height of 0.05 to 1.20 mm, and a width of 0.5 to 2.0 mm (preferably 0.5 mm to 1.0 mm). In addition, the vertical cross-sectional shape of the broken rib is preferably a quadrangular shape, a trapezoidal shape, a semicircular shape, a rectangular shape with a dome-shaped top, a trapezoidal shape with a dome-shaped top, a trapezoidal shape with curved sides in the height direction, a quadrangular shape with chamfered top corners, or an isosceles triangular shape.

In a lead acid battery used for an automobile, sulfuric acid having a high specific gravity generated at the positive electrode plate during charging sediments at the bottom of the battery (downward) due to the difference in specific gravity, which causes electrolyte stratification.

In the separator for a lead acid battery of the invention, broken ribs having a specific shape are arranged on a surface on a side that comes into contact with the positive electrode plate, so that the movement of sulfuric acid having a high specific gravity generated during charging to the bottom of the battery (downward) is inhibited, and electrolyte stratification can be suppressed.

Sulfuric acid having a high specific gravity generated at the positive electrode plate sediments at the bottom of the battery (downward) along the surface of the separator on a side that comes into contact with the positive electrode plate. At that time, the movement of sulfuric acid to the bottom of the battery (downward) is inhibited by the broken ribs that have a specific shape described above and are arranged on the surface on a side that comes into contact with the positive electrode plate.

In the separator for a lead acid battery of the invention, further, the broken ribs having a specific shape described above are arranged so that when this sulfuric acid moves to the bottom of the battery (downward), straight downward movement from the top of the battery to the bottom of the battery is inhibited, and it moves downward in a zigzag manner.

That is, as in the arrangement examples of broken ribs shown in FIGS. 2 to 5, in the separator for a lead acid battery of the invention, by arranging the broken ribs substantially horizontally to one another with respect to the horizontal direction (CD direction) of the separator, the movement of sulfuric acid to the bottom of the battery (downward) is inhibited.

For example, in the case of the linear broken rib shown in FIG. 1, the line segment (b), or the line segment (a) and/or the line segment (c) is preferably disposed at an inclination of 90° or less with respect to the horizontal direction (CD direction) of the separator, and more preferably disposed at an inclination of 60° or less.

In addition, for example, in the case of the curved broken rib having one inflection point, the tangent line at the inflection point is preferably disposed at an inclination of 45° or less with respect to the horizontal direction (CD direction) of the separator, more preferably disposed at an inclination of 30° or less, and further more preferably disposed at an inclination of 10° or less.

In the separator for a lead acid battery of the invention, it is preferred that the broken ribs are arranged such that the broken ribs adjacent to each other in the vertical direction (MD direction) of the separator do not completely overlap with each other when viewed from the vertical direction (MD direction) of the separator so that straight downward movement of sulfuric acid generated during charging is inhibited by the arranged broken ribs and sulfuric acid moves downward in a zigzag manner.

In the separator for a lead acid battery of the invention, it is preferred that overlap, when viewed from the vertical direction (MD direction) of the separator, between a gap formed between a set of a broken rib and a broken rib adjacent to each other in the horizontal direction (CD direction) of the separator and a gap formed between another set of a broken rib and a broken rib adjacent to each other in the horizontal direction (CD direction) of the separator, disposed adjacent in the vertical direction (MD direction) of the separator is preferably less than 50%, more preferably less than 20%, and further more preferably 0% so that sulfuric acid generated during charging does not move downward linearly (parallel to the vertical direction of the separator) from the top of the battery to the bottom of the battery by passing through a space (gap) between a broken rib and another broken rib adjacent to the broken rib in the horizontal direction (CD direction) of the separator.

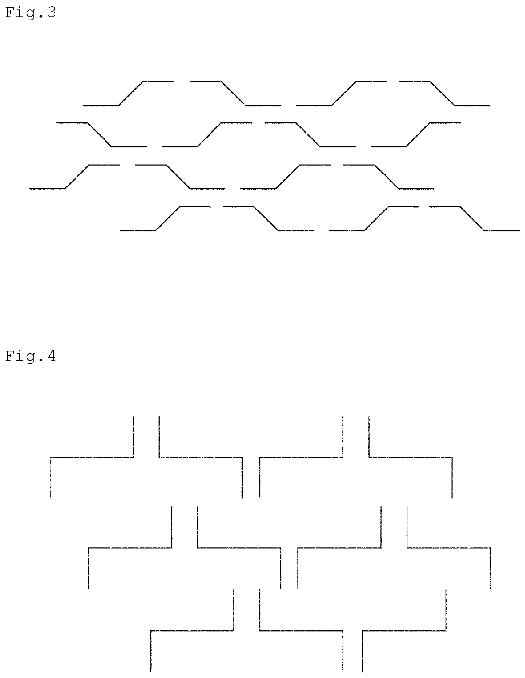

The gap formed between a set of a broken rib and a broken rib adjacent to each other in the horizontal direction (CD direction) of the separator in this case refers to a gap formed between a set of a broken rib and a broken rib adjacent to each other disposed substantially parallel to the horizontal direction (CD direction) of the separator as shown in the arrangement examples of broken ribs in FIGS. 3 to 5.

For example, in the arrangement example of broken ribs in FIG. 4, no overlap is seen (0% overlap), when viewed from the vertical direction (MD direction) of the separator, between a gap formed between a set of a broken rib and a broken rib adjacent to each other disposed on the top left side and a gap formed between a set of a broken rib and a broken rib adjacent to each other disposed on the left side of the second row from the top disposed adjacent on the lower side in the vertical direction (MD direction) of the separator.

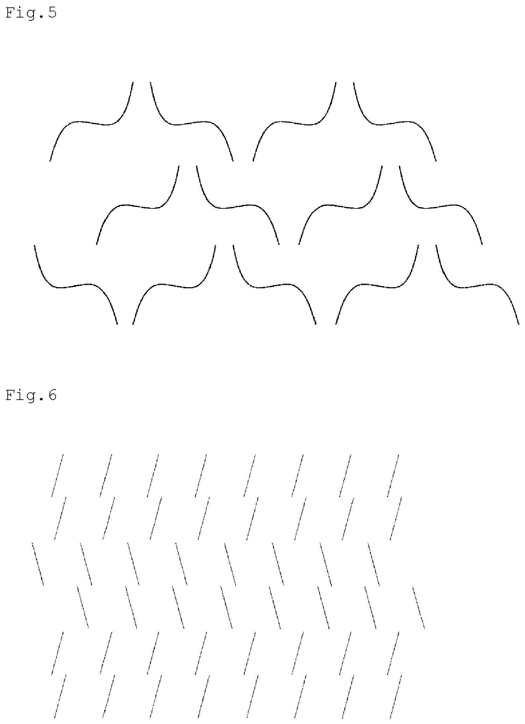

The same applies to the arrangement examples of broken ribs shown in FIGS. 3 and 5.

Further, in the case of the arrangement example of broken ribs shown in **FIG.** 2, for example, no overlap is seen (0% overlap), when viewed from the vertical direction (MD direction) of the separator, between a gap formed between a broken rib disposed first from the top in the third column from the left and a broken rib disposed first from the top in the second column from the left and a gap which is a gap disposed adjacent on the lower side in the vertical direction (MD direction) of the separator and is formed between a broken rib disposed first from the top in the second column from the left and a broken rib disposed second from the top in the third column from the left.

In the separator for a lead acid battery of the invention, it is preferred that the broken ribs arranged while maintaining the above-mentioned relationship (the degree of overlap, when viewed from the vertical direction (MD direction) of the separator, between a gap formed between a set of a broken rib and a broken rib adjacent to each other and a gap formed between another set of a broken rib and a broken rib adjacent to each other, disposed adjacent on the lower side in the vertical direction (MD direction) of the separator) account for 50% or more of the total broken ribs arranged on the surface of the separator on the side that comes into contact with the positive electrode plate.

Further, except in the case where the broken ribs are disposed at the top or bottom of the separator, it is preferred that overlap, when viewed from the vertical direction (MD direction) of the separator, between a gap formed between a broken rib and another broken rib located on the right side of the broken rib with respect to the horizontal direction (CD direction) of the separator and disposed most adjacent to the broken rib, and a gap formed between the broken rib and another broken rib located on the right side of the broken rib with respect to the horizontal direction (CD direction) of the separator and disposed second most adjacent to the broken rib is preferably less than 50%, more preferably less than 20%, and further more preferably 0%.

In that case, the gap formed between a broken rib and another broken rib located on the right side of the broken rib with respect to the horizontal direction (CD direction) of the separator and disposed most adjacent to the broken rib means, for example, a gap formed between a broken rib disposed second from the top in the second column from the left and another broken rib located on the right side of the broken rib with respect to the horizontal direction (CD direction) of the separator and disposed most adjacent to the broken rib, that is, a broken rib disposed third from the top in the third column from the left in the arrangement example of broken ribs in FIG. 2 (the shortest distance between the end portion of the broken rib and another broken rib adjacent thereto).

In addition, the gap formed between the broken rib and another broken rib located on the right side of the broken rib with respect to the horizontal direction (CD direction) of the separator and disposed second most adjacent to the broken rib means, for example, a gap formed between a broken rib disposed second from the top in the second column from the left and another broken rib located on the right side of the broken rib with respect to the horizontal direction (CD direction) of the separator and disposed second most adjacent to the broken rib, that is, a broken rib disposed second from the top in the third column from the left in the arrangement example of broken ribs in FIG. 2 (the shortest distance between the broken rib and the end portion of another broken rib adjacent thereto).

Then, in the arrangement example of broken ribs in FIG. 2, no overlap is seen (0% overlap) between these two gaps when viewed from the vertical direction (MD direction) of the separator.

Similarly, except in the case where the broken ribs are disposed at the top or bottom of the separator, it is preferred that overlap, when viewed from the vertical direction (MD direction) of the separator, between a gap formed between a broken rib and another broken rib located on the left side of the broken rib with respect to the horizontal direction (CD direction) of the separator and disposed most adjacent to the broken rib, and a gap formed between the broken rib and another broken rib located on the left side of the broken rib with respect to the horizontal direction (CD direction) of the separator and disposed second most adjacent to the broken rib is preferably less than 50%, more preferably less than 20%, and further more preferably 0%.

In that case, the gap formed between a broken rib and another broken rib located on the left side of the broken rib with respect to the horizontal direction (CD direction) of the separator and disposed most adjacent to the broken rib means, for example, a gap formed between a broken rib disposed third from the top in the second column from the right and another broken rib located on the left side of the broken rib with respect to the horizontal direction (CD direction) of the separator and disposed most adjacent to the broken rib, that is, a broken rib disposed second from the top in the third column from the right in the arrangement example of broken ribs in FIG. 2 (the shortest distance between the broken rib and the end portion of another broken rib adjacent thereto).

In addition, the gap formed between the broken rib and another broken rib located on the left side of the broken rib with respect to the horizontal direction (CD direction) of the separator and disposed second most adjacent to the broken rib means, for example, a gap formed between a broken rib disposed third from the top in the second column from the right and another broken rib located on the left side of the broken rib with respect to the horizontal direction (CD direction) of the separator and disposed second most adjacent to the broken rib, that is, a broken rib disposed third from the top in the third column from the right in the arrangement example of broken ribs in FIG. 2 (the shortest distance between the end portion of the broken rib and another broken rib adjacent thereto).

Then, in the arrangement example of broken ribs in FIG. 2, no overlap is seen (0% overlap) between these two gaps when viewed from the vertical direction (MD direction) of the separator.

The broken rib shown in the arrangement example of broken ribs in FIG. 2 is a linear broken rib having two bending points and has a shape in which line segments located at both ends are substantially parallel to each other and the bending angles at all bending points are 90° or more and less than 180°.

Then, the line segments (b) (see FIG. 1) of the broken ribs are disposed substantially horizontally to one another with respect to the horizontal direction (CD direction) of the separator. In addition, except in the case where the broken ribs are disposed at the top or bottom of the separator, the broken ribs are arranged so that there is no overlap (0% overlap), when viewed from the vertical direction (MD direction) of the separator, between a gap formed between a broken rib and another broken rib located on the right side of the broken rib with respect to the horizontal direction (CD direction) of the separator and disposed most adjacent to the broken rib, and a gap formed between the broken rib and another broken rib located on the right side of the broken rib with respect to the horizontal direction (CD direction) of the separator and disposed second most adjacent to the broken rib.

By adopting such an arrangement, when sulfuric acid generated at the positive electrode plate sediments at the bottom of the battery (downward) along the surface of the separator on a side that comes into contact with the positive electrode plate, straight downward movement is inhibited by the arranged broken ribs and sulfuric acid moves along the shape of the broken rib. Then, sulfuric acid after moving along the shape of the broken rib sediments at the bottom of the battery (downward) from the lower end portion of the broken rib in the vertical direction (MD direction) of the separator (the gap formed between a set of adjacent broken ribs), but straight downward movement is inhibited by another broken rib disposed adjacent on the lower side with respect to the vertical direction (MD direction) of the separator, and sulfuric acid moves along the shape of the broken rib. In this manner, straight downward movement from the top of the battery to the bottom of the battery of sulfuric acid generated at the positive electrode plate is inhibited, and sulfuric acid moves downward in a zigzag manner due to the arranged broken ribs and the shape thereof, and therefore, it is considered that electrolyte stratification can be made less likely to occur.

The broken rib shown in the arrangement example of broken ribs in FIG. 3 is a linear broken rib having two bending points and has a shape in which line segments located at both ends are parallel to each other and the bending angles at all bending points are 90° or more and less than 180°.

Then, the line segment (a) and the line segment (c) (see FIG. 1) of the broken rib are disposed horizontally to each other with respect to the horizontal direction (CD direction) of the separator. In addition, the broken ribs are arranged so that there is no overlap (0% overlap), when viewed from the vertical direction (MD direction) of the separator, between a gap formed between a set of a broken rib and a broken rib adjacent to each other in the horizontal direction (CD direction) of the separator and a gap formed between another set of a broken rib and a broken rib adjacent to each other in the horizontal direction (CD direction) of the separator, disposed adjacent in the vertical direction (MD direction) of the separator.

By adopting such an arrangement, in the same manner as in the arrangement example shown in FIG. 2, straight downward movement from the top of the battery to the bottom of the battery of sulfuric acid generated at the positive electrode plate is inhibited, and sulfuric acid moves downward in a zigzag manner due to the arranged broken ribs and the shape thereof, and therefore, it is considered that electrolyte stratification can be made less likely to occur.

The broken rib shown in the arrangement example of broken ribs in FIG. 4 is a linear broken rib having two bending points and has a shape in which line segments located at both ends are parallel to each other and the bending angles at all bending points are 90°.

Then, the line segments (b) (see FIG. 1) of the broken ribs are disposed horizontally to one another with respect to the horizontal direction (CD direction) of the separator. In addition, the broken ribs are arranged so that there is no overlap (0% overlap), when viewed from the vertical direction (MD direction) of the separator, between a gap formed between a set of a broken rib and a broken rib adjacent to each other in the horizontal direction (CD direction) of the separator and a gap formed between another set of a broken rib and a broken rib adjacent to each other in the horizontal direction (CD direction) of the separator, disposed adjacent in the vertical direction (MD direction) of the separator.

By adopting such an arrangement, in the same manner as in the arrangement example shown in FIG. 2, straight downward movement from the top of the battery to the bottom of the battery of sulfuric acid generated at the positive electrode plate is inhibited, and sulfuric acid moves downward in a zigzag manner due to the arranged broken ribs and the shape thereof, and therefore, it is considered that electrolyte stratification can be made less likely to occur.

The broken rib shown in the arrangement example of broken ribs in FIG. 5 is a curved broken rib having one inflection point and has a shape in which an internal angle formed by a tangent line at the inflection point and a tangent line at a tip portion of the rib is 90° or more and less than 180°.

Then, the tangent lines at the inflection points of the broken ribs are disposed substantially horizontally to one another with respect to the horizontal direction (CD direction) of the separator. In addition, the broken ribs are arranged so that there is no overlap (0% overlap), when viewed from the vertical direction (MD direction) of the separator, between a gap formed between a set of a broken rib and a broken rib adjacent to each other in the horizontal direction (CD direction) of the separator and a gap formed between another set of a broken rib and a broken rib adjacent to each other in the horizontal direction (CD direction) of the separator, disposed adjacent in the vertical direction (MD direction) of the separator.

By adopting such an arrangement, in the same manner as in the arrangement example shown in FIG. 2, straight downward movement from the top of the battery to the bottom of the battery of sulfuric acid generated at the positive electrode plate is inhibited, and sulfuric acid moves downward in a zigzag manner due to the arranged broken ribs and the shape thereof, and therefore, it is considered that electrolyte stratification can be made less likely to occur.

In the separator for a lead acid battery of the invention, when the size of the separator is set to 115 mm × 120 mm, as for the number of broken ribs, it is preferred that 4 to 20 broken ribs are arranged in the horizontal direction (CD direction) of the separator, and 10 to 20 broken ribs are arranged in the vertical direction (MD direction) of the separator, and it is more preferred that 5 to 10 broken ribs are arranged in the horizontal direction (CD direction) of the separator, and 10 to 15 broken ribs are arranged in the vertical direction (MD direction) of the separator.

In the separator for a lead acid battery of the invention, as for the thickness of the separator, the thickness of the base excluding the height of the rib is preferably 0.1 to 0.3 mm, more preferably 0.15 mm or more and 0.25 mm or less. When the thickness of the base is too thick, the internal resistance of the lead acid battery increases, which is undesirable as a lead acid battery for an idling stop vehicle. On the other hand, when it is less than 0.15 mm, the strength of the separator is lowered, and the separator may tear during vibration, which is not preferred.

Further, the total thickness including the ribs on both surfaces of the separator is preferably 1.4 mm or less.

In the separator for a lead acid battery of the invention, the porosity of the separator (by mercury porosimetry) is preferably 50 to 90 vol%. When it is 50 vol% or more, as the separator, the internal resistance (electrical resistance) of the separator can be kept low, which contributes to enhancing the performance of the lead acid battery. Therefore, the porosity of the separator (by mercury porosimetry) is more preferably 60 to 90 vol%, and further more preferably 70 to 90 vol%.

In the separator for a lead acid battery of the invention, it is preferred that the broken ribs are made of the same material as the separator base, which is a flat plate portion of the separator, and are formed integrally with the base.

In such a case, a separator which is advantageous also in terms of productivity and production cost can be formed.

The separator for a lead acid battery of the invention is not particularly limited in terms of constituent materials, production method, or the like. However, for example, it may be one obtained by extruding a raw material composition prepared by blending appropriate amounts of a thermoplastic resin, an inorganic powder, and a plasticizer into a sheet form while heat-melting and kneading using a twin-screw extruder or the like, molding it into a sheet having a predetermined thickness and a predetermined shape through a pair of molding rolls pre-engraved with predetermined grooves so as to impart a predetermined rib shape, and thereafter immersing it in an appropriate solvent compatible with the plasticizer thereby extracting and removing a predetermined amount of the plasticizer, followed by drying.

Examples of the thermoplastic resin used for the separator for a lead acid battery of the invention include polyvinyl resins such as polyvinyl chloride (PVC); and polyolefin resins such as polyethylene, polypropylene, and an ethylene-butene copolymer.

In the separator for a lead acid battery of the invention, a polyolefin resin is preferably used, and more preferably, a polyethylene resin, and further more preferably, a high molecular weight polyethylene resin is used. The high molecular weight polyethylene resin preferably has a molecular weight of at least 600,000, and an ultra-high molecular weight polyethylene resin (UHMWPE) having a molecular weight of 5,000,000 is more preferred.

Examples of the inorganic powder used for the separator for a lead acid battery of the invention include silica such as precipitated silica and fumed silica, mica, montmorillonite, kaolinite, talc, diatomaceous earth, vermiculite, natural and synthetic zeolites, calcium silicate, clay, aluminum silicate, sodium aluminum silicate, aluminum polysilicate, alumina silica gel, glass particles, carbon black, activated carbon, carbon fiber, graphite, titanium oxide, iron oxide, copper oxide, zinc oxide, lead oxide, tungsten, antimony oxide, zirconia, magnesia, alumina, molybdenum disulfide, zinc sulfide, barium sulfate, strontium sulfate, calcium carbonate, and magnesium carbonate.

In the separator for a lead acid battery of the invention, silica such as precipitated silica or fumed silica is preferably used.

As the plasticizer used for the separator for a lead acid battery of the invention, it is preferred to select a material that can be used as a plasticizer for a polyolefin-based resin, and various organic liquids that are compatible with a polyolefin-based resin and can be easily extracted with various solvents can be used. Specifically, as the plasticizer, a mineral oil such as an industrial lubricating oil made of a saturated hydrocarbon (paraffin), a higher alcohol such as stearyl alcohol, an ester-based plasticizer such as dioctyl phthalate, or the like can be used. Among them, a mineral oil is preferred because it is easy to reuse.

The plasticizer is preferably blended in the raw material composition in an amount of 30 to 70 wt%.

As the solvent used for extracting and removing the plasticizer, a saturated hydrocarbon-based organic solvent such as hexane, heptane, octane, nonane, or decane can be used.

In the raw material composition or the separator after film formation, according to need, an additive such as an antioxidant, an ultraviolet absorber, a weather proofing agent, a lubricant, an antibacterial agent, an antifungal agent, a pigment, a dye, a coloring agent, an antifogging agent, or a matting agent may be added (blended) or contained within a range that does not impair the object and effect of the invention.

Next, an embodiment of a lead acid battery using the separator for a lead acid battery of the invention will be described, but the lead acid battery of the invention is not limited to the following embodiment.

### [Electrolyte]

An electrolyte contains sulfuric acid in an aqueous solution. The electrolyte may be gelled as needed. The electrolyte may contain an additive used for a lead acid battery as needed.

The specific gravity of the electrolyte at 20°C in a lead acid battery in a fully charged state after chemical conversion is, for example, 1.10 g/cm³ or more and 1.35 g/cm³ or less.

### [Positive Electrode Plate]

In the positive electrode plate for a lead acid battery, there are a paste type and a clad type.

A paste-type positive electrode plate includes a positive electrode current collector and a positive electrode material. The positive electrode material is held by the positive electrode current collector. In the paste-type positive electrode plate, the positive electrode material is a material resulting from excluding the positive electrode current collector from the positive electrode plate. The positive electrode current collector may be formed in the same manner as a negative electrode current collector, and can be formed by casting lead or a lead alloy or processing a lead or lead alloy sheet.

A clad-type positive electrode plate includes a plurality of porous tubes, a core metal inserted into each tube, a positive electrode material filled in the tubes into which the core metal is inserted, and a serial seat that connects the plurality of tubes. In the clad-type positive electrode plate, the positive electrode material is a material resulting from excluding the tubes, the core metal, and the serial seat from the positive electrode plate.

As the lead alloy used for the positive electrode current collector, a Pb-Ca-based alloy or a Pb-Ca-Sn-based alloy is preferred in terms of corrosion resistance and mechanical strength. The positive electrode current collector may have a lead alloy layer having a different composition, and may include a plurality of alloy layers. As the core metal, it is preferred to use a Pb-Ca-based alloy or a Pb-Sb-based alloy.

The positive electrode material contains a positive electrode active material (lead dioxide or lead sulfate) that exhibits a capacity through a redox reaction. The positive electrode material may contain another additive as needed.

A paste-type positive electrode plate before chemical conversion is obtained by filling a positive electrode current collector with a positive electrode paste, and then aging and drying as in the case of a negative electrode plate. Thereafter, the positive electrode plate before chemical conversion is subjected to chemical conversion. The positive electrode paste is prepared by kneading a lead powder, an additive, water, and sulfuric acid.

The clad-type positive electrode plate is formed by filling a lead powder or a lead powder in a slurry form into tubes having a core metal inserted therein and connecting the plurality of tubes using a serial seat.

### [Negative Electrode Plate]

A negative electrode plate for a lead acid battery is formed of a negative electrode current collector and a negative electrode material. The negative electrode material is a material resulting from excluding the negative electrode current collector from the negative electrode plate. The negative electrode current collector may be formed by casting lead (Pb) or a lead alloy or processing a lead or lead alloy sheet. Examples of the processing method include expanding processing and punching processing. It is preferred to use a negative electrode grid as the negative electrode current collector because it is easy to support the negative electrode material.

The lead alloy used for the negative electrode current collector may be any of a Pb-Sb-based alloy, a Pb-Ca-based alloy, and a Pb-Ca-Sn-based alloy. These lead or lead alloys may further contain at least one element selected from the group consisting of Ba, Ag, Al, Bi, As, Se, Cu, and the like as an additive element.

The negative electrode material contains a negative electrode active material (lead or lead sulfate) that exhibits a capacity through a redox reaction, and may contain an anti-shrinking agent, a carbonaceous material such as carbon black, barium sulfate, or the like, and may contain another additive as needed.

The negative electrode active material in a charged state is spongy lead, but a negative electrode plate before chemical conversion is usually produced using a lead powder.

The negative electrode plate can be formed by filling a negative electrode current collector with a negative electrode paste, and then aging and drying, thereby preparing a negative electrode plate before chemical conversion, and thereafter subjecting the negative electrode plate before chemical conversion to chemical conversion. The negative electrode paste can be prepared by adding water and sulfuric acid to a lead powder, an organic anti-shrinking agent, and according to need, various additives, followed by kneading. In the aging step, it is preferred to age the negative electrode plate before chemical conversion at a temperature higher than room temperature and high humidity.

The chemical conversion can be carried out by charging an electrode plate group including the negative electrode plate before chemical conversion in a state where the electrode plate group is immersed in an electrolyte containing sulfuric acid in the battery jar of the lead acid battery. However, the chemical conversion may be performed prior to assembling of the lead acid battery or the electrode plate group. By the chemical conversion, spongy lead is formed.

### Examples

The invention will be described more specifically below with reference to Examples and Comparative Examples, but the invention is not limited to the following Examples without departing from the gist thereof.

### [Production of Microporous Film Separator]

### (Example 1)

30 parts by mass of an ultra-high molecular weight polyethylene resin (UHMWPE) powder having a weight average molecular weight of 5,000,000 as a thermoplastic resin, 70 parts by mass of a silica fine powder having an average particle diameter of 15 µm as an inorganic powder, and a paraffinic oil which is a type of mineral oil as a plasticizer were mixed with a mixer. The obtained mixture was heat-melted and kneaded by a twin-screw extruder, and the resultant was extruded into a sheet form from a T-die, and compression molding was performed on both surfaces of the sheet by allowing the sheet to pass between a pair of molding rolls including rolls having grooves corresponding to the rib pattern. As a result, a non-porous film in which main ribs for contacting the positive electrode plate having a predetermined shape were integrally molded on one surface of the sheet and mini-ribs for contacting the negative electrode having a linear continuous shape parallel to the flow direction (machine direction: MD direction) of extrusion molding were integrally molded on the surface on the opposite side of the sheet was produced.

Subsequently, the continuous non-porous film was allowed to pass through the inside of a liquid tank containing an organic solvent so as to be immersed, thereby extracting and removing the paraffinic oil, leaving a portion. This film was allowed to pass through the inside of a drying oven, thereby producing a microporous film separator having a total thickness of 0.70 mm and a base portion thickness of 0.20 mm.

Note that the broken rib for contacting the positive electrode has a linear broken rib shape with two bending points as shown in FIG. 1, and as for the lengths and angles of the respective sides: the line segment (a), the line segment (b), and the line segment (c) of each broken rib, the lengths of the line segment (a) and the line segment (c) are 4.5 mm, the length of the line segment (b) is 10 mm, the angles formed by each of the line segment (a) and the line segment (c) with the line segment (b) are 135°, and the line segment (b) is parallel to the horizontal direction (CD direction) of the separator. As for each of the plurality of broken ribs, as shown in FIG. 2, a plurality of broken ribs are arranged substantially horizontally, and the broken ribs adjacent to each other in the horizontal direction (CD direction) of the separator have a relationship like mirror symmetry with respect to an axis parallel to the vertical direction (MD direction) of the separator. Further, a gap between the broken ribs adjacent to each other in the horizontal direction (CD direction) of the separator and a gap between the broken ribs adjacent to each other in the horizontal direction (CD direction) of the separator, disposed closest in the vertical direction (MD direction) of the separator (for example, in FIG. 2, a gap between the broken rib disposed second from the top in the leftmost column and the broken rib disposed second from the top in the second column from the left and a gap between the broken rib disposed second from the top in the leftmost column and the broken rib disposed first from the top in the second column from the left) do not overlap with each other at all when viewed from the vertical direction (MD direction) of the separator, and these gaps are all 3 mm.

In addition, the broken rib for contacting the positive electrode has a trapezoidal shape as a cross-sectional shape perpendicular to the longitudinal direction of the rib, and the height of the rib is 0.40 mm, the width of the lower side of the trapezoidal cross section of the rib is 0.80 mm, and the width of the upper side is 0.40 mm.

On the other hand, the mini-rib for contacting the negative electrode has a rectangular shape as a cross-sectional shape perpendicular to the longitudinal direction of the mini-rib. The height of the mini-rib is 0.10 mm, the distance between the mini-ribs is 0.55 mm, and the width of the mini-rib is 0.10 mm.

### (Example 2)

A microporous film separator was produced in the same manner as in Example 1 except that the length of the line segment (b) of the broken rib for contacting the positive electrode was set to 7 mm.

### (Comparative Example 1)

A microporous film separator was produced in the same manner as in Example 1 except that the rib for contacting the positive electrode was changed to a rib which is linearly continuous in the vertical direction (MD direction) of the separator, and the width between the respective ribs was set to 10 mm.

### (Comparative Example 2)

A microporous film separator was produced in the same manner as in Example 1 except that as shown in FIG. 6, the rib for contacting the positive electrode includes a linear broken rib that does not have a bending point and has a length of 12 mm, and regarding an arrangement (arrangement 1), in which two sets of arrays of broken ribs with an inclination of 75° with respect to the horizontal direction (CD direction) of the separator arranged at equal intervals of 12 mm in the horizontal direction (CD direction) of the separator are aligned in the vertical direction (MD direction) of the separator, and an arrangement (arrangement 2), in which two sets of arrays of broken ribs with an inclination of 105° with respect to the horizontal direction (CD direction) of the separator arranged at equal intervals of 12 mm in the horizontal direction (CD direction) of the separator are aligned in the vertical direction (MD direction) of the separator, the arrangement 1 and the arrangement 2 are alternately arrayed without gaps in the vertical direction (MD direction) of the separator.

### (Comparative Example 3)

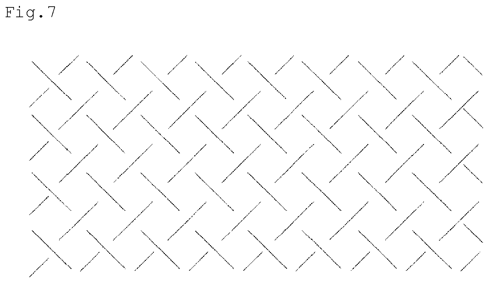

A microporous film separator was produced in the same manner as in Example 1 except that as shown in FIG. 7, the rib for contacting the positive electrode includes two types of linear broken ribs (broken rib A and broken rib B) that do not have a bending point and have a length of 25 mm, and the broken rib A has an inclination of 45° with respect to the horizontal direction (CD direction) of the separator, and the broken ribs A are arranged at equal intervals of 30 mm in each of the horizontal direction (CD direction) and the vertical direction (MD direction) of the separator, the broken rib B has an inclination of 135° with respect to the horizontal direction (CD direction) of the separator, and the broken ribs B are arranged at equal intervals of 30 mm in each of the horizontal direction (CD direction) and the vertical direction (MD direction) of the separator, and the midpoint of the broken rib B is disposed so as to overlap with the midpoint on the line that connects an end point and an end point of a set of broken ribs A disposed closest to the center point.

### (Comparative Example 4)

A microporous film separator was produced in the same manner as in Example 1 except that a gap between the broken ribs adjacent to each other in the horizontal direction (CD direction) of the separator and a gap between the broken ribs adjacent to each other in the horizontal direction (CD direction) of the separator, disposed closest in the vertical direction (MD direction) of the separator completely overlap with each other (the narrower gap completely overlaps within the range of the wider gap) when viewed from the vertical direction (MD direction) of the separator, and between these gaps, the narrower one is 3 mm and the wider one is 6 mm.

### [Test and Evaluation Method]

Two acrylic plates having a width of 125 mm, a height of 120 mm, and a thickness of 15 mm were made to face each other and sandwich each of the microporous film separators produced in Examples 1 to 2 and Comparative Examples 1 to 4 cut to a width of 115 mm and a length of 105 mm, and these were arranged so that the heights of the upper ends of the acrylic plates and the microporous film separator were the same. In each of the two acrylic plates, holes penetrating in the thickness direction were opened at both left and right ends, and the two acrylic plates were fixed using bolts and nuts. Hereinafter, one obtained by sandwiching the microporous film separator between the two acrylic plates is called a cell. The tightening of the bolts was adjusted so that the gap between the acrylic plates in the cell was 0.65 mm. The produced cell was placed in a water tank filled with water to a height of 115 mm.

When evaluating the effect of suppressing sedimentation of the electrolyte and the ease of diffusion in the horizontal direction, from the viewpoint of operability, in place of sulfuric acid having a specific gravity of 1.28 (36.9%) used as the electrolyte, a colored sodium chloride aqueous solution having a specific gravity of 1.20 colored using a black aqueous pigment was prepared and used.

The space between the separator and the acrylic plates in the cell was filled with water. From the upper surface of the cell, 2 mL of the colored sodium chloride aqueous solution was dropped over 10 seconds onto a central portion in the horizontal direction between the positive electrode contact surface of the separator and the acrylic plate. A state where the colored sodium chloride aqueous solution sediments was visually observed, and a time required for even a single drop of the dropped colored sodium chloride aqueous solution to reach the lower end from the upper end of the separator for the first time (sedimentation time), and a range in which the colored sodium chloride aqueous solution spreads in the horizontal direction (CD direction) of the separator were measured, and the effect of suppressing sedimentation of the electrolyte and the ease of diffusion in the horizontal direction (CD direction) of the separator (diffusion range) due to the difference in rib shape for contacting the positive electrode were evaluated.

### [Evaluation Results]

The evaluation results are summarized in Table 1.

**[Table 1]**

| Item | Unit | Example 1 | Example 2 | Comparative Example 1 | Comparative Example 2 | Comparative Example 3 | Comparative Example 4 |
|---|---|---|---|---|---|---|---|
| Rib shape | - | Linear broken rib | Linear broken rib | Linear continuous rib | Linear broken rib (no bending) | Linear broken rib (no bending) | Linear broken rib |
| Arrangement of ribs | - | Gaps do not overlap when viewed from vertical direction | Gaps do not overlap when viewed from vertical direction | Rib spacing: 10 mm | Gaps overlap when viewed from vertical direction | Gaps overlap when viewed from vertical direction | Gaps overlap when viewed from vertical direction |
| Diffusion range | mm | 75 < | 75 < | 10 | 45 | 45 | 75 < |
| Sedimentation time | sec | 16 | 17 | 7 | 5 | 12 | 10 |

In Comparative Example 1, the ribs for contacting the positive electrode are linearly and continuously arranged in the vertical direction (MD direction) of the separator, and the space between the positive electrode and the separator is divided by long divisions in the vertical direction (MD direction) of the separator, and therefore, it is difficult for the electrolyte to come and go between the divisions corresponding to the horizontal direction (CD direction) of the separator. Therefore, the dropped colored sodium chloride aqueous solution sedimented in the vertical direction (MD direction) of the separator in the regions vertically divided by the ribs, and reached the lower end of the separator after 7 seconds. The diffusion of the colored sodium chloride aqueous solution in the horizontal direction (CD direction) of the separator was limited only to a range with a width of 10 mm divided by the ribs for contacting the positive electrode.

In the case of the rib shape of Comparative Example 1, when an electrolyte having a high specific gravity is generated, the diffusion effect in the horizontal direction (CD direction) of the separator is low, and the downward movement along the ribs for contacting the positive electrode arranged in the vertical direction (MD direction) of the separator is fast, and therefore, the rib has a shape that is likely to cause electrolyte stratification.

In comparison with this, the ribs for contacting the positive electrode in Comparative Example 2 are linear broken ribs arranged in the vertical direction (MD direction) of the separator, and the space is not divided by long divisions in the vertical direction (MD direction) of the separator.

The dropped colored sodium chloride aqueous solution spread 45 mm in the horizontal direction (CD direction) of the separator by the inclined broken ribs, but reached the lower end of the separator after 5 seconds. Although the solution spreads between the broken ribs and there is a diffusion effect in the horizontal direction (CD direction) of the separator, the gaps formed between the broken rib and the broken rib adjacent to each other in the horizontal direction (CD direction) of the separator overlap with each other in the vertical direction (MD direction) of the separator, and therefore, the colored sodium chloride aqueous solution sedimented linearly in the vertical direction (MD direction) of the separator, and thus, the rib has a shape that is relatively likely to cause electrolyte stratification.

In Comparative Example 3, the time required for the colored sodium chloride aqueous solution to sediment is shorter than in Example 1 and Example 2. This is because the shape of the broken rib is a linear shape that does not have a bending point, so that stagnation on the broken rib does not occur. Therefore, the effect of suppressing electrolyte stratification is smaller than in Example 1 and Example 2.

In Comparative Example 4, the time required for the colored sodium chloride aqueous solution to sediment is shorter than in Example 1 and Example 2. The shape of the broken rib in Comparative Example 4 is a linear shape having a bending point, but the gaps formed between the broken rib and the broken rib adjacent to each other in the horizontal direction (CD direction) of the separator completely overlap with each other in the vertical direction (MD direction) of the separator, and therefore, the effect of suppressing electrolyte stratification is smaller than in Example 1 and Example 2.

In Example 1 and Example 2, the dropped colored sodium chloride aqueous solution sedimented in the vertical direction (MD direction) of the separator while sufficiently spreading in the horizontal direction (CD direction) of the separator, and it took 16 seconds and 17 seconds, respectively, to reach the lower end of the separator. In comparison with respective Comparative Examples, the range in which the liquid spread in the horizontal direction (CD direction) of the separator (diffusion range) is wide and also the sedimentation time in the vertical direction (MD direction) of the separator is long, and the effect of suppressing electrolyte stratification is large.

### Industrial Applicability

The separator for a lead acid battery of the invention has a broken rib shape that is effective for controlling the movement of the electrolyte inside the battery jar, and the broken ribs are arranged so that the movement of the electrolyte inside the battery jar can be effectively controlled, and therefore, an optimum separator capable of suppressing electrolyte stratification and suppressing a deterioration in the reliability of battery control and a decrease in the battery life due to electrolyte stratification can be provided.

### Reference Signs List

(a): Line segment present between end of broken rib and bending point adjacent thereto
(b): Line segment present between bending point and bending point adjacent thereto
(c): Line segment present between bending point and end of broken rib adjacent thereto
X: Horizontal direction (CD direction) of separator
Y: Vertical direction (MD direction) of separator

## Claims

1. A separator for a lead acid battery for use in a flooded lead acid battery, wherein the separator comprises a porous backweb and a plurality of ribs extending from each of both surfaces of the backweb, the rib on a surface on a side that comes into contact with a positive electrode plate is a broken rib,
**characterized in that**
the rib has a shape with two or more bending points, and is a linear broken rib that bends in opposite directions at each of two consecutive bending points or is a curved broken rib having one or more inflection points; and
the plurality of broken ribs are arranged such that a gap formed between a set of the broken rib and the broken rib adjacent to each other in a horizontal direction (CD direction, X) of the separator does 0% overlap in a vertical direction (MD direction, Y) of the separator with a gap formed between another set of the broken rib and the broken rib adjacent to each other in the horizontal direction (CD direction, X) of the separator, disposed adjacent in the vertical direction (MD direction, Y) of the separator.

2. The separator for a lead acid battery according to claim 1, **characterized in that** the broken rib includes those having mutually different bending angles or those having mutually different line segment lengths.

3. The separator for a lead acid battery according to claim 1, **characterized in that** the broken rib has two-fold rotational symmetry.

4. The separator for a lead acid battery according to claim 1, **characterized in that** the broken rib is a linear broken rib in which line segments ((a), (c)) located at both ends are substantially parallel to each other.

5. The separator for a lead acid battery according to any one of claims 1 to 4, **characterized in that** the broken rib is a linear broken rib having a shape in which bending angles at all bending points are 90° or more and less than 180°.

6. The separator for a lead acid battery according to any one of claims 1 to 5, **characterized in that** the broken rib is a linear broken rib having two bending points.

7. The separator for a lead acid battery according to any one of claims 1 to 3, **characterized in that** the broken rib is a curved broken rib having a shape in which an internal angle formed by a tangent line at an inflection point and a tangent line at an inflection point adjacent thereto, or an internal angle formed by a tangent line at an inflection point and a tangent line at a tip portion of the rib is 90° or more and less than 180°.

8. The separator for a lead acid battery according to claim 7, **characterized in that** the broken rib is a curved broken rib that has one inflection point and has a shape in which an internal angle formed by a tangent line at the inflection point and a tangent line at a tip portion of the rib is 90° or more and less than 180°.

9. The separator for a lead acid battery according to any one of claims 1 to 8, **characterized in that** the plurality of broken ribs are arranged substantially horizontally to one another with respect to the horizontal direction (CD direction, X) of the separator.

10. The separator for a lead acid battery according to any one of claims 1 to 8, **characterized in that** the plurality of broken ribs are arranged such that the broken rib and another broken rib adjacent to the broken rib in the vertical direction (MD direction, Y) of the separator do not completely overlap with each other in the vertical direction (MD direction, Y) of the separator.

11. The separator for a lead acid battery according to any one of claims 1 to 8, **characterized in that** the plurality of broken ribs are arranged such that a gap formed between the broken rib and the broken rib most adjacent to the broken rib, located on a right side with respect to the horizontal direction (CD direction, X) of the separator does not overlap in the vertical direction (MD direction, Y) of the separator with a gap formed between the broken rib and the broken rib second most adjacent to the broken rib, located on the right side of the broken rib with respect to the horizontal direction (CD direction, X) of the separator, or a gap formed between the broken rib and the broken rib most adjacent to the broken rib**,** located on a left side with respect to the horizontal direction (CD direction, X) of the separator does not overlap in the vertical direction (MD direction, Y) of the separator with a gap formed between the broken rib and the broken rib second most adjacent to the broken rib, located on the left side of the broken rib with respect to the horizontal direction (CD direction, X) of the separator.

12. A lead acid battery, comprising the separator according to any one of claims 1 to 11.

## Patentansprüche

1. Ein Separator für eine Blei-Säure-Batterie zur Verwendung in einer nassen Blei-Säure-Batterie, wobei der Separator eine poröse Rückwand und eine Mehrzahl an Rippen aufweist, die sich von jeder der beiden Oberflächen der Rückwand erstrecken, wobei die Rippe auf einer Oberfläche der mit einer positiven Elektrodenplatte in Kontakt kommenden Seite eine unterbrochene Rippe ist,
**dadurch gekennzeichnet, dass**
die Rippe eine Form mit zwei oder mehr Biegepunkten aufweist und eine lineare gebrochene Rippe ist, die an jedem von zwei aufeinanderfolgenden Biegepunkten in entgegengesetzte Richtungen gebogen ist, oder eine gekrümmte gebrochene Rippe ist, die einen oder mehrere Wendepunkte aufweist; und
die Mehrzahl an gebrochenen Rippen so angeordnet sind, dass ein Spalt, der zwischen einem Satz der gebrochenen Rippen und den in horizontaler Richtung (CD-Richtung, X) des Separators benachbarten gebrochenen Rippen gebildet wird, in vertikaler Richtung (MD-Richtung, Y) des Separators mit einem Spalt überlappt, der zwischen einem anderen Satz der gebrochenen Rippen und der gebrochenen Rippe gebildet wird, die in horizontaler Richtung (CD-Richtung, X) des Separators aneinander angrenzen und in vertikaler Richtung (MD-Richtung, Y) des Separators benachbart angeordnet sind.

2. Der Separator für eine Blei-Säure-Batterie nach Anspruch 1, **dadurch gekennzeichnet, dass** die gebrochene Rippe solche mit voneinander abweichenden Biegewinkeln oder solche mit voneinander abweichenden Linienabschnittslängen aufweist.

3. Der Separator für eine Blei-Säure-Batterie nach Anspruch 1, **dadurch gekennzeichnet, dass** die gebrochene Rippe eine zweifache Rotationssymmetrie aufweist.

4. Der Separator für eine Blei-Säure-Batterie nach Anspruch 1, **dadurch gekennzeichnet, dass** die gebrochene Rippe eine lineare gebrochene Rippe ist, bei der die an beiden Enden angeordneten Linienabschnitte ((a), (c)) im Wesentlichen parallel zueinander verlaufen.

5. Der Separator für eine Blei-Säure-Batterie nach einem der Ansprüche 1 bis 4, **dadurch gekennzeichnet, dass** die gebrochene Rippe eine lineare gebrochene Rippe ist, deren Form so gestaltet ist, dass die Biegewinkel an allen Biegepunkten 90° oder mehr und weniger als 180° betragen.

6. Der Separator für eine Blei-Säure-Batterie nach einem der Ansprüche 1 bis 5, **dadurch gekennzeichnet, dass** die gebrochene Rippe eine lineare gebrochene Rippe ist, welche zwei Biegepunkte aufweist.

7. Der Separator für eine Blei-Säure-Batterie nach einem der Ansprüche 1 bis 3, **dadurch gekennzeichnet, dass** die gebrochene Rippe eine gekrümmte gebrochene Rippe ist, deren Form so gestaltet ist, dass ein Innenwinkel, der durch eine Tangente an einem Wendepunkt und eine Tangente an einem benachbarten Wendepunkt gebildet wird, oder ein Innenwinkel, der durch eine Tangente an einem Wendepunkt und eine Tangente an einem Endpunkt der Rippe gebildet wird, 90° oder mehr und weniger als 180° beträgt.

8. Der Separator für eine Blei-Säure-Batterie nach Anspruch 7, **dadurch gekennzeichnet, dass** die gebrochene Rippe eine gekrümmte gebrochene Rippe ist, die einen Wendepunkt aufweist und deren Form so gestaltet ist, dass der Innenwinkel, der durch eine Tangente am Wendepunkt und eine Tangente an einem Endpunkt der Rippe gebildet wird, 90° oder mehr und weniger als 180° beträgt.

9. Der Separator für eine Blei-Säure-Batterie nach einem der Ansprüche 1 bis 8, **dadurch gekennzeichnet, dass** die Mehrzahl an gebrochenen Rippen, in Bezug auf die horizontale Richtung (CD-Richtung, X) des Separators, im Wesentlichen horizontal zueinander angeordnet sind.

10. Der Separator für eine Blei-Säure-Batterie nach einem der Ansprüche 1 bis 8, **dadurch gekennzeichnet, dass** die Mehrzahl an gebrochenen Rippen so angeordnet sind, dass sich die gebrochene Rippe und eine andere gebrochene Rippe, die in vertikaler Richtung (MD-Richtung, Y) des Separators an die gebrochene Rippe angrenzt, in vertikaler Richtung (MD-Richtung, Y) des Separators nicht vollständig überlappen.

11. Der Separator für eine Blei-Säure-Batterie nach einem der Ansprüche 1 bis 8, **dadurch gekennzeichnet, dass** die Mehrzahl an gebrochenen Rippen so angeordnet sind, dass ein Spalt, der zwischen der gebrochenen Rippe und der der gebrochenen Rippe nächstliegenden gebrochenen Rippe gebildet wird, die sich in Bezug auf die horizontale Richtung (CD-Richtung, X) des Separators auf der rechten Seite befindet, sich in vertikaler Richtung (MD-Richtung, Y) des Separators nicht mit einem Spalt überlappt, der zwischen der gebrochenen Rippe und der der gebrochenen Rippe zweitnächstliegenden gebrochenen Rippe gebildet ist, die sich in Bezug auf die horizontale Richtung (CD-Richtung, X) des Separators auf der rechten Seite der gebrochenen Rippe befindet, oder ein Spalt, der zwischen der gebrochenen Rippe und der der gebrochenen Rippe nächstliegenden gebrochenen Rippe gebildet wird, die sich in Bezug auf die horizontale Richtung (CD-Richtung, X) des Separators nicht in vertikaler Richtung (MD-Richtung, Y) des Separators mit einem Spalt überlappt, der zwischen der gebrochenen Rippe und der der gebrochenen Rippe zweitnächstliegenden gebrochenen Rippe gebildet wird, die sich in Bezug auf die horizontale Richtung (CD-Richtung, X) des Separators auf der linken Seite der gebrochenen Rippe befindet.

12. Eine Blei-Säure-Batterie, die den Separator gemäß einem der Ansprüche 1 bis 11 aufweist.

## Revendications

1. Séparateur pour une batterie au plomb-acide destiné à être utilisé dans une batterie au plomb-acide à électrolyte liquide, dans lequel le séparateur comporte un support poreux et une pluralité de nervures s'étendant à partir de chacune des deux surfaces du support, la nervure sur une surface d'un côté qui vient en contact avec une plaque d'électrode positive est une nervure cassée,
**caractérisé en ce que**
la nervure a une forme avec deux ou plusieurs points de flexion et est une nervure cassée linéaire qui est coudée dans des directions opposées à chacun des deux points de flexion consécutifs, ou est une nervure cassée incurvée ayant un ou plusieurs points d'inflexion ; et
les nervures de la pluralité de nervures cassées sont disposées de telle sorte qu'un espace formé entre un ensemble constitué de la nervure cassée et de la nervure cassées adjacentes l'une à l'autre dans une direction horizontale (direction CD, X) du séparateur chevauche à 0 % dans une direction verticale (direction MD, Y) du séparateur un espace formé entre un autre ensemble constitué de la nervure cassée et de la nervure cassée adjacentes l'une à l'autre dans la direction horizontale (direction CD, X) du séparateur, disposées adjacentes dans la direction verticale (direction MD, Y) du séparateur.

2. Séparateur pour une batterie au plomb-acide selon la revendication 1, **caractérisé en ce que** la nervure cassée inclut celles ayant des angles de flexion mutuellement différents ou celles ayant des longueurs de segment de ligne mutuellement différentes.

3. Séparateur pour une batterie au plomb-acide selon la revendication 1, **caractérisé en ce que** la nervure cassée présente une double symétrie de rotation.

4. Séparateur pour une batterie au plomb-acide selon la revendication 1, **caractérisé en ce que** la nervure cassée est une nervure cassée linéaire dans laquelle des segments de ligne ((a), (c)) situés aux deux extrémités sont sensiblement parallèles l'un à l'autre.

5. Séparateur pour une batterie au plomb-acide selon l'une quelconque des revendications 1 à 4, **caractérisé en ce que** la nervure cassée est une nervure cassée linéaire ayant une forme dans laquelle des angles de flexion à tous les points de flexion sont de 90° ou plus et inférieurs à 180°.

6. Séparateur pour une batterie au plomb-acide selon l'une quelconque des revendications 1 à 5, **caractérisé en ce que** la nervure cassée est une nervure cassée linéaire ayant deux points de flexion.

7. Séparateur pour une batterie au plomb-acide selon l'une quelconque des revendications 1 à 3, **caractérisé en ce que** la nervure cassée est une nervure cassée incurvée ayant une forme dans laquelle un angle interne formé par une droite tangente à un point d'inflexion et une droite tangente à un point d'inflexion adjacent à celle-ci, ou un angle interne formé par une droite tangente à un point d'inflexion et une droite tangente à une partie de pointe de la nervure est de 90° ou plus et inférieur à 180°.

8. Séparateur pour une batterie au plomb-acide selon la revendication 7, **caractérisé en ce que** la nervure cassée est une nervure cassée incurvée qui a un point d'inflexion et a une forme dans laquelle un angle interne formé par une droite tangente au point d'inflexion et une droite tangente à une partie de pointe de la nervure est de 90° ou plus et inférieur à 180°.

9. Séparateur pour une batterie au plomb-acide selon l'une quelconque des revendications 1 à 8, **caractérisé en ce que** les nervures de la pluralité de nervures cassées sont disposées de manière sensiblement horizontale les unes par rapport aux autres par rapport à la direction horizontale (direction CD, X) du séparateur.

10. Séparateur pour une batterie au plomb-acide selon l'une quelconque des revendications 1 à 8, **caractérisé en ce que** les nervures de la pluralité de nervures cassées sont disposées de telle sorte que la nervure cassée et une autre nervure cassée adjacente à la nervure cassée dans la direction verticale (direction MD, Y) du séparateur ne se chevauchent pas complètement les unes avec les autres dans la direction verticale (direction MD, Y) du séparateur.

11. Séparateur pour une batterie au plomb-acide selon l'une quelconque des revendications 1 à 8, **caractérisé en ce que** les nervures de la pluralité de nervures cassées sont disposées de telle sorte qu'un espace formé entre la nervure cassée et la nervure cassée la plus adjacente à la nervure cassée, située sur un côté droit par rapport à la direction horizontale (direction CD, X) du séparateur ne chevauche pas dans la direction verticale (direction MD, Y) du séparateur un espace formé entre la nervure cassée et la nervure cassée en seconde position la plus adjacente à la nervure cassée, située sur le côté droit de la nervure cassée par rapport à la direction horizontale (direction CD, X) du séparateur, ou un espace formé entre la nervure cassée et la nervure cassée la plus adjacente à la nervure cassée, situé sur un côté gauche par rapport à la direction horizontale (direction CD, X) du séparateur ne chevauche pas dans la direction verticale (direction MD, Y) du séparateur un espace formé entre la nervure cassée et la nervure cassée en seconde position la plus adjacente à la nervure cassée, située sur le côté gauche de la nervure cassée par rapport à la direction horizontale (direction CD, X) du séparateur.

12. Batterie au plomb-acide, comportant le séparateur selon l'une quelconque des revendications 1 à 11.
